(19) Europäisches Patentamt
European Patent Office
Office européen des brevets

(11) EP 2 516 533 B1

(12) **EUROPÄISCHE PATENTSCHRIFT**

(45) Veröffentlichungstag und Bekanntmachung des Hinweises auf die Patenterteilung:
**04.09.2013 Patentblatt 2013/36**

(21) Anmeldenummer: **10793259.2**

(22) Anmeldetag: **17.12.2010**

(51) Int Cl.:
***C09D 5/32*** (2006.01) ***C09D 7/12*** (2006.01)
***B32B 27/18*** (2006.01) ***B05D 7/00*** (2006.01)
***C08K 5/544*** (2006.01)

(86) Internationale Anmeldenummer:
**PCT/EP2010/070125**

(87) Internationale Veröffentlichungsnummer:
**WO 2011/085909 (21.07.2011 Gazette 2011/29)**

(54) **MEHRSCHICHTSYSTEM, ENTHALTEND EINE BASISSCHICHT, EINE PRIMERSCHICHT UND EINE KRATZFESTSCHICHT**

MULTI-LAYER SYSTEM COMPRISING A BASE LAYER, A PRIMER LAYER AND A SCRATCH-PROOF LAYER

SYSTÈME MULTICOUCHE COMPRENANT UNE COUCHE DE BASE, UNE COUCHE DE PRIMAIRE ET UNE COUCHE RÉSISTANT AUX ÉRAFLURES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2009 DE 102009059774**

(43) Veröffentlichungstag der Anmeldung:
**31.10.2012 Patentblatt 2012/44**

(73) Patentinhaber: **Bayer Intellectual Property GmbH**
**40789 Monheim (DE)**

(72) Erfinder:
- **MEYER ZU BERSTENHORST, Birgit**
  **51375 Leverkusen (DE)**
- **CAPELLEN, Peter**
  **47803 Krefeld (DE)**

(74) Vertreter: **BIP Patents**
**c/o Bayer Intellectual Property GmbH**
**Creative Campus Monheim**
**Alfred-Nobel-Straße 10**
**40789 Monheim (DE)**

(56) Entgegenhaltungen:
**EP-A2- 0 227 070** **WO-A1-2010/127805**
**DE-A1- 3 120 853** **DE-A1-102007 050 192**
**DE-A1-102008 010 752** **US-A1- 2006 074 153**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Mehrschichtsystem, enthaltend eine Basisschicht aus einem thermoplastischem Kunststoff, eine Primerschicht, und eine Kratzfestschicht aus einem Kratzfestlack, wobei das Mehrschichtsystem dadurch gekennzeichnet ist, dass die Primerschicht einen bestimmten UV-Absorber enthält und dem Kratzfestlack eine bestimmte Menge an Säure, bevorzugt Essigsäure zugesetzt wird.

Polycarbonat eignet sich aufgrund seiner guten optischen, mechanischen und thermischen Eigenschaften und wegen des geringeren Gewichtes als Ersatzmaterial für Glas und als Einsatzmaterial in sogenannten Glazing-Anwendungen. Nachteilig ist jedoch die niedrigere Kratzfestigkeit und Witterungsstabilität. Häufig wird dieses durch Auftragen von UV-Absorber-haltigen Beschichtungen ausgeglichen.

Eine nach heutigem Stand der Technik sehr gute Klasse von UV- Absorbern sind Biphenylsubstituierte Triazine (WO 2006/108520 A) . Diese Substanzklasse zeigt eine hervorragende Absorptionswirkung bei 320- 380 nm und gleichzeitig eine sehr hohe eigene UV- Stabilität (WO 2000/066675 A1, US- A 6, 225, 384) . Wegen ihrer stark ausgeprägten aromatischen Natur lösen sich die meisten bis heute bekannten Substanzen dieser Klasse gut nur in unpolaren und mittelpolaren Medien. Die bekannten kommerziell erhältlichen Triazine lassen sich in UV- härtenden Schutzlacken einsetzen, die auf rein organischer Basis beruhen. Für Anwendungen mit höheren Anforderungen an die Kratzfestigkeit sind diese Schutzlacke jedoch nicht ausreichend.

Wenn das Material durch die Schutzschicht effektiv gegen Abrieb und Kratzer geschützt werden soll, sind Sol-Gel-Silikatlacke (siehe z.B. EP-A 0 339 257, US-A 5,041,313) und andere Hybridlacke (EP-A 0 570 165) heutiger Stand der Technik. Das Eigenschaftsprofil der organosilan-basierten Lacke schließt außerdem exzellente Wetter- und Lichtstabilität, Widerstandskraft gegen Hitze, Alkali, Lösungsmittel, und Feuchtigkeit ein. Allerdings sind in diesen Lacksystemen unpolare Additive nicht löslich, als UV-Absorber werden wahlweise die kommerziell erhältlichen mäßig polaren, meist hydroxy-haltigen UV-Absorber und/oder anorganische UV-Absorber, wie Titandioxid, Zinkoxid oder Cerdioxid, verwendet, die jedoch nicht die optimale Wirkung besitzen (EP-A 0 931 820). Die DE 10200901943.2 beschreibt, wie sich auch die Polarität von UV-Absorbern mit Triazinstruktur über Modifizierung mit Trialkoxysilangruppen erhöhen lässt. Diese Anmeldung verfolgt das Ziel, Triazin-Derivate zur Verfügung zu stellen, welche sich in den polaren Kratzfestlacken lösen.

Alternativ oder zusätzlich können auch unpolare bzw. mittelpolare UV-Absorber auch in einer sogenannten Primerschicht gelöst werden, die unter dem Kratzschutzschicht aufgetragen wird. Die Primerschicht enthält organische Bindermaterialien, die sowohl eine gute Haftung zu Thermoplast-Oberflächen, wie auch zu den Kratzfestlacken besitzen. Primerschichten für die Haftvermittlung zwischen thermoplastischen Basisschichten und siloxanbasierten Kratzfestlack sind beispielsweise aus US 5,041,313 sowie US 5,391,795 und den dort zitierten Patenten bekannt und werden als Haftvermittler bei der Beschichtung von Polycarbonat eingesetzt. Zusätzlich zu der Haftvermittlung können diese Primerschichten auch noch einen UV-Absorber enthalten wie in US 5,041,313 und US 5,391,795 erwähnt und so einen Beitrag zur Witterungsstabilität des beschichteten Bauteils leisten.

Aus der EP-A 6 727 32 ist ein Schichtaufbau aus Polycarbonat, Primer und Decklackschicht bekannt, worin die Primerschicht einen UV-Stabilisator auf Basis von Resorcinderivaten enthält.

Aus der WO 2009/049904 A1 ist bekannt, dass Primerschichten enthaltend Triazin-basierte UV-Absorber der Formel (V):

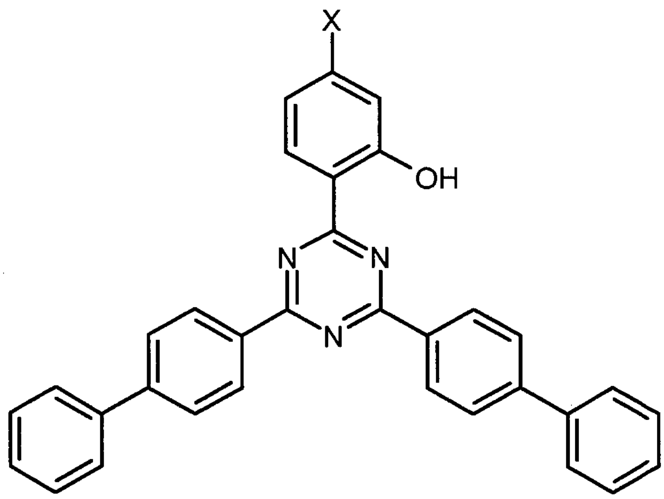

(V)

wobei

X = $OR^6$, $OCH_2CH_2OR^6$, $OCH_2CH (OH) CH_2OR^6$ oder $OCH (R^7) COOR^8$, worin

$R^6$ = verzweigtes oder unverzweigtes $C_1$- $C_{13}$- Alkyl, $C_2$- $C_{20}$- Alkenyl, $C_6$- $C_{12}$- Aryl oder- CO- $C_1$- $C_{18}$- Alkyl,

$R^7$ = H oder verzweigtes oder unverzweigtes $C_1$- $C_8$- Alkyl, und

$R^8$ = $C_1$- $C_{12}$- Alkyl-, $C_2$- $C_{12}$- Alkenyl oder $C_5$- $C_6$- Cycloalkyl sind,

sich besonders gut eignen und auch sehr gute Bewitterungsstabilität aufweisen. Auch die Verwendung einer Kombination von UV-Absorbern der Hydroxybenzophenon-Klasse, insbesondere Resorcin-basierten UV-Stabilisatoren mit Triazin-basierten UV-Stabilisatoren der Formel (V) insbesondere in Primerzusammensetzungen für transparente thermoplastische Substrate, wie insbesondere solchen aus Polycarbonaten, wird als besonders geeignet beschrieben.

Der Einsatz dieser Triazine erhöht die UV-Absorber-Eigenschaften der Primerschicht gegenüber konventionellen Primern in vergleichbarer Dicke. Alternativ ist es möglich, die Viskosität der Primerzusammensetzung niedriger einzustellen, so dass die Dicke der Primerschicht geringer werden kann. Die minimale Dicke der UV-Absorber-haltigen Primerschicht wird bestimmt durch den gewünschten UV-Schutz, da die UV-Absorber eine beschränkte Löslichkeit in der Primerzusammensetzung besitzen. Wird die Konzentration des Triazin-UV-Absorbers in der Primerschicht zu hoch, fällt dieser aus und das Mehrschichtsystem wird trüb.

Um die Haftung des Kratzfestlackes auf der Primerschicht zu erhöhen, hat es sich als vorteilhaft erwiesen, diesem Essigsäure zuzusetzen. Durch die Zugabe von Essigsäure zum Kratzschutzlack wird eine Interpenetrationsschicht (IPL) zwischen Primer- und Kratzschutzschicht aufgebaut, welche zu einer verbesserten Haftung der zwei Schichten führt. Hierbei dringt der Kratzschutzlack in die Primerschicht ein, und es bildet sich zwischen der Kratzschutzschicht und der Primerschicht noch eine Primer/Kratzschutz-Mischschicht aus. Durch die Ausbildung der IPL wird die Langzeitstabilität der Mehrschichtsysteme erhöht, was sich z.B. an geringerer Rissbildung im Kratzfestlack in der Bewitterung zeigt. Die Triazinverbindungen, die bisher in der Primerschicht eingesetzt wurden (siehe WO 2009/049904 A1) und die insbesondere für den Schutz von Polycarbonat geeignet sind, sind jedoch in dieser IPL-Schicht unlöslich. Daher konzentrieren sich bei der Zugabe von Essigsäure zum Kratzfestschutzlack in der verbleibenden Primerschicht mit reduzierter Dicke auf. Mit zunehmendem Essigsäuregehalt im Kratzschutzlack wird die IPL Schicht immer stärker ausgebildet und somit die Primerschicht immer dünner, so dass es zu Trübungen durch nicht mehr gelösten/ausgefallenen UV-Absorber kommt.

Es bestand also die Aufgabe, ein Mehrschichtsystem geeignet für Glazing-Anwendungen zur Verfügung zu stellen, welches sowohl eine effektive und dauerhafte UV-Schutzwirkung bei hoher Witterungsbeständigkeit zeigt als auch die durch eine große Interpenetrationsschicht bewirkte sehr gute Haftung zwischen Primerschicht und Kratzfestlack aufweist.

Es gelang nun überraschenderweise durch den Einsatz von silylierten UV-Absorber-Derivaten auf Triazinbasis in der Primerschicht mittels Zugabe von Essigsäure zum Kratzfestlack die Haftung zwischen Primer- und Kratzfestschicht über die Ausbildung einer Interpenetrationsschicht zu erhöhen, ohne dass es wie bei den herkömmlichen UV-Absorbern zu Ausfällungen und damit zur Eintrübung der Systeme kommt.

Die Erfindung betrifft daher ein Mehrschichtsystem, enthaltend eine Basisschicht aus einem thermoplastischem Kunststoff, eine Primerschicht, und eine Kratzfestschicht aus einem Kratzfestlack, wobei das Mehrschichtsystem dadurch gekennzeichnet ist, dass die Primerschicht einen silylierten UV-Absorber auf Triazinbasis enthält und dem Kratzfestlack eine bestimmte Menge an Essigsäure zugesetzt wird.

Bei denen im Rahmen dieser Erfindung geeigneten thermoplastischen Kunststoffen für die Basisschicht der Mehrschichtsysteme handelt es sich um Polycarbonat, Polyestercarbonat, Polyester (wie beispielsweise Polyalkylenterephthalate) , Polyphenylenether, Pfropfcopolymere (wie beispielsweise ABS) , Polyacrylate, insbesondere Poly (meth) acrylate, und Polystyrol sowie deren Mischungen. Aufgrund ihrer hohen Transparenz und ihrer besonderen Langzeitstabilität können die erfindungsgemäßen Beschichtungen insbesondere auf transparenten Kunststoffen wie Polycarbonat, Polyacrylaten, insbesondere Poly (meth) acrylaten, Polyester und Polystyrol sowie deren Copolymeren und Mischungen (Blends) eingesetzt werden. Bevorzugt ist Polycarbonat, insbesondere Homopolycarbonat, Copolycarbonat und/ oder thermoplastisches Polyestercarbonat. In besonders vorteilhafter Weise werden vor allem Bisphenol- A- basierte (aromatische) Polycarbonate vor UV- Strahlung geschützt.

Bei den im Rahmen dieser Erfindung geeigneten Primerschichten der Mehrschichtsysteme handelt es sich um aus einer Primerzusammensetzung durch Härtung entstandene Schichten. Wobei der Begriff Härtung hier sowohl eine chemische Vernetzung wie auch eine Trocknung ohne Reaktion je nach verwendetem Primertyp beinhaltet.

Der Ausdruck "Primerzusammensetzung" bedeutet im Rahmen der vorliegenden Erfindung die typischen und hier geeigneten Dickprimerformulierungen, bestehend aus einem Bindermaterial (a1) in einem Lösemittel (a2), einem silylierten UV-Absorber auf Triazinbasis (a3) und eventuell weiteren UV-Stabilisatoren (a4) und anderen Additiven oder Stabilisatoren wie Antioxidantien, gehinderte Amine oder Farbstoffe oder anorganische Füllstoffe.

Besonders geeignet als Basis für die Primerschicht und damit bevorzugt sind Polyacrylate als Bindermaterial (a1), wobei sowohl Polyacrylattypen in Frage kommen, die beim Härten nur Trocknen ohne eine chemische Reaktion einzugehen, wie auch Typen, die beim Härten über eine chemische Reaktion noch quervernetzt werden. Ganz besonders bevorzugt ist Polymethylmethacrylat. Als Lösemittel (a2) geeignet sind organische Lösemittel wie Alkane, Alkohole, Ether, Ester oder Ketone, wobei auch Emulsionen von Polyacrylat in Wasser bzw. wasserbasierten Lösemittelgemischen prinzipiell in Frage kommen.

Diese Primerformulierungen sind prinzipiell bekannt und beispielsweise in US 5391795, US 5041313 und US 4410594 im Detail offenbart. Beispielsweise ist SHP470® von Momentive Performance Materials Inc. ein Haftvermittler auf Polymethylmethacrylatbasis (a1) , unter anderem mit 1- Methoxy- 2- propanol und Diacetonalkohol als Lösemittel (a2) und Dibenzoylresorcin als UV- Absorber (a4) . Dieser Primer wird für die Haftvermittlung zwischen Polycarbonatsubstrat und Polysiloxandecklacken, hier bevorzugt dem AS4700 von Momentive Performance Materials Inc. verwendet.

Die Primerformulierung enthält zusätzlich eine silylierte Triazin- Verbindung (a3) , welche ihr zugegeben wird. Die geeigneten silylierten Triazin- Verbindungen (a3) sind solche der generellen Formel (I) :

$$A\text{- }X\text{ (- }T\text{- }Q\text{- }P)_n \qquad (I),$$

wobei

A

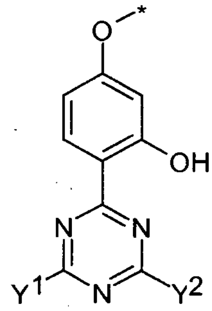

ist, wobei

$Y^1$ und $Y^2$ unabhängig voneinander Substituenten der generellen Formel

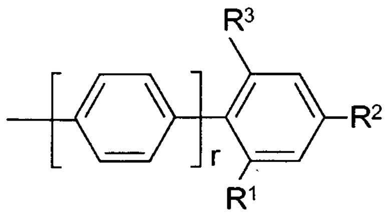

sind, wobei

r gleich 0 oder 1 ist und bevorzugt gleich 1 ist,

$R^1$, $R^2$, $R^3$ unabhängig voneinander H, OH, C1- 20 Alkyl, C4- 12 Cycloalkyl, C2- 20 Alkenyl, C1- 20 Alkoxy, C4- 12 Cycloalkoxy, C2- 20 Alkenyloxy, C7- 20 Aralkyl, Halogen, -C≡N, C1- 5 Haloalkyl, -SO2R', -SO3H, -SO3M (M = Alkalimetall) , -COOR', -CONHR', -CONR'R", -OCOOR', -OCOR', -OCONHR', (Meth) acrylamino, (Meth) acryloxy, C6- 12 Aryl (optional substituiert durch C1- 12 Alkyl, C1- 12 Alkoxy, CN und/ oder Halogen) , C3- 12 Heteroaryl (optional substituiert durch C1- 12 Alkyl, C1- 12 Alkoxy, CN und/ oder Halogen) sind, und wobei R' und R''- H, C1- 20 Alkyl, -C4- 12 Cycloalkyl, C6- 12 Aryl (optional substituiert durch C1- 12 Alkyl, C1- 12 Alkoxy, CN und/ oder Halogen) oder C3- 12 Heteroaryl (optional substituiert durch C1- 12 Alkyl, C1- 12 Alkoxy, CN und/ oder Halogen) bedeuten,

T eine Urethan- Gruppe- O- (C=O)- NH- oder eine Urea- Gruppe-

NH- (C=O)- NH- ist, und bevorzugt eine Urethan- Gruppe- O- (C=O)- NH- ist,

Q - $(CH_2)_m$- ist, wobei m = 1, 2 oder 3 ist,

P eine Mono-, Di- oder Trialkoxysilangruppe ist, wobei Alkoxy- bevorzugt für Methoxy-, Ethoxy- oder (2- Methoxy)- Ethoxy- steht, und

n eine ganze Zahl zwischen 1 und 5 bedeutet.

X ein linearer oder verzweigter Linker ist, dadurch gekennzeichnet, dass zwischen dem O- Atom der Gruppe A und jeder T- Gruppe eine Kette aus mindestens 3, bevorzugt 4 Atomen ausgewählt aus Kohlenstoff, Sauerstoff, Stickstoff, Schwefel, Phosphor und/ oder Silizium in der Kette besteht. Beispielsweise kann es sich um eine (optional substituierte) Kohlenwasserstoffkette- $(CR_2)$-$_j$ handeln, wobei j eine ganze Zahl größer als 3 ist, oder es kann sich um eine durch O, N, S, P und/ oder Si unterbrochene, optional einfach oder mehrfach, auch unterschiedlich, substituierte Kohlenwasserstoffkette handeln, z.B. um eine- $CR_2$- (C=O)- O- $CR_2$- Kette. Bevorzugt stehen die R, unabhängig voneinander, für H oder Alkylreste.

Von den Verbindungen der allgemeinen Formel (I) sind die Verbindungen der allgemeinen Formel (II) bevorzugt:

$$A\text{- }C\ (R^4)\ H\text{- }C\ (=O)\text{- }O\text{- }(CH_2\text{- }CH_2\text{- }O)_q\text{- }CH_2\text{- }CHrT\text{- }Q\text{- }P \qquad (II),$$

entsprechend

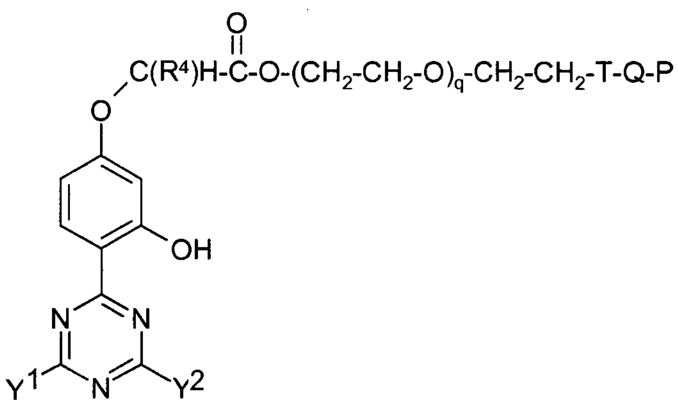

(II),

wobei $R^4$- H oder C1- 20 Alkyl bedeutet und q = 0, 1, 2 oder 3 ist.

Ebenso sind die Verbindungen der allgemeinen Formel (I) mit n≥2 (Formel III)

$$A\text{- }X\ (\text{- }T\text{- }Q\text{- }P)_{n\geq 2} \qquad (III)$$

bevorzugt.

In den Formeln (II) und (III) haben A, $Y^1$, $Y^2$, X, T, Q und P die unter der Formel (I) beschriebenen Bedeutungen.

Die Synthese solcher Triazine kann analog des in der bereits zitierten DE 10200901943.2 beschriebenen Herstellungsverfahrens erfolgen. Auf die gesamte Offenbarung der DE 10200901943.2 und insbesondere auf die Beschreibung der Herstellung der Triazine und die dort beschriebenen Ausführungsbeispiele wird hiermit Bezug genommen.

Ganz besonders sind von den Verbindungen mit der allgemeinen Formel (I) folgende Verbindungen bevorzugt:

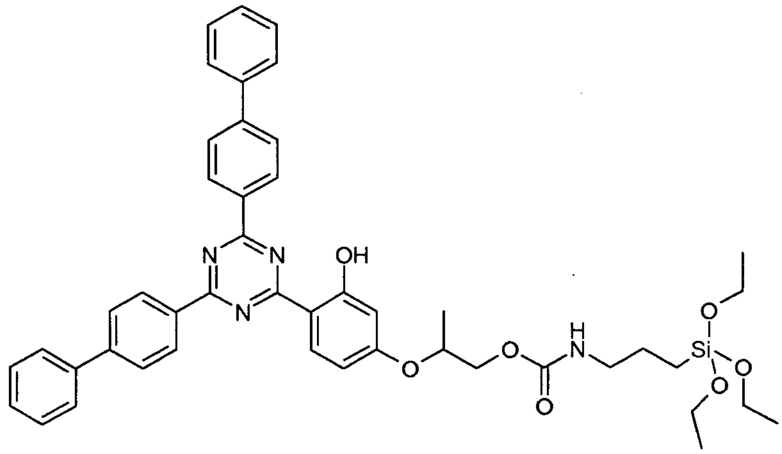

(I.1)

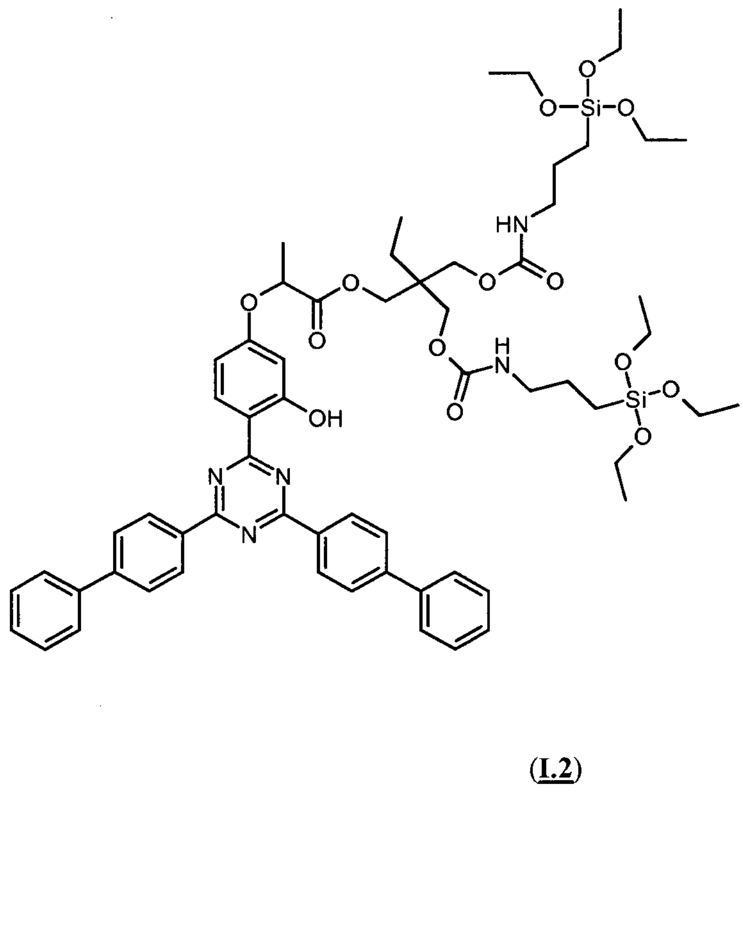

(I.2)

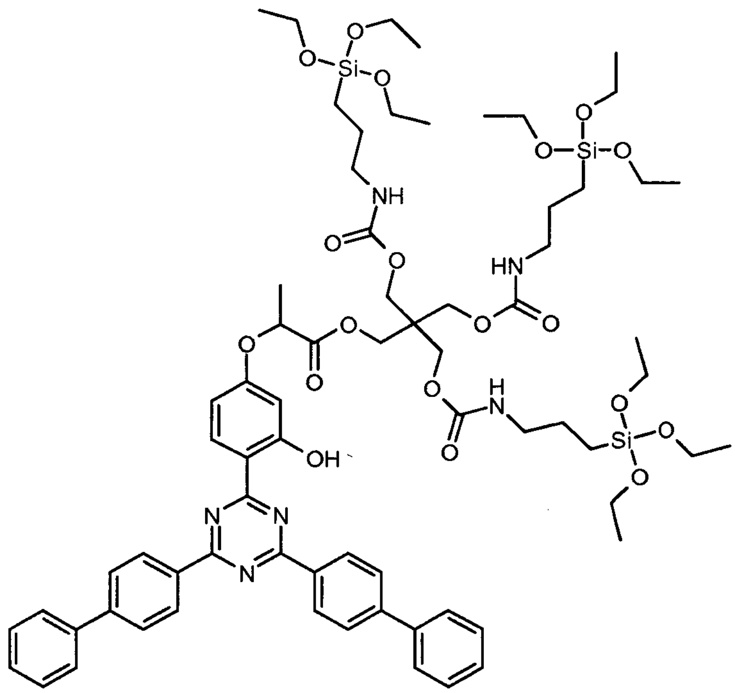

(I.3)

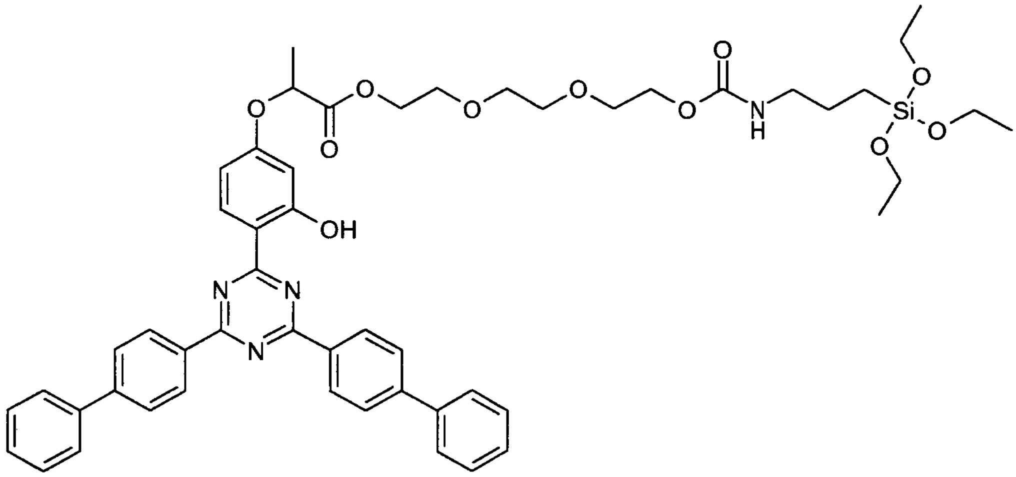

(I.4)

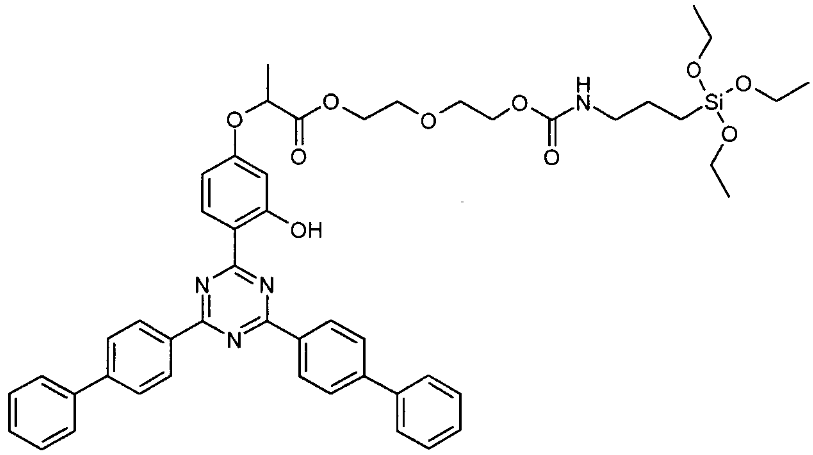

(I.5)

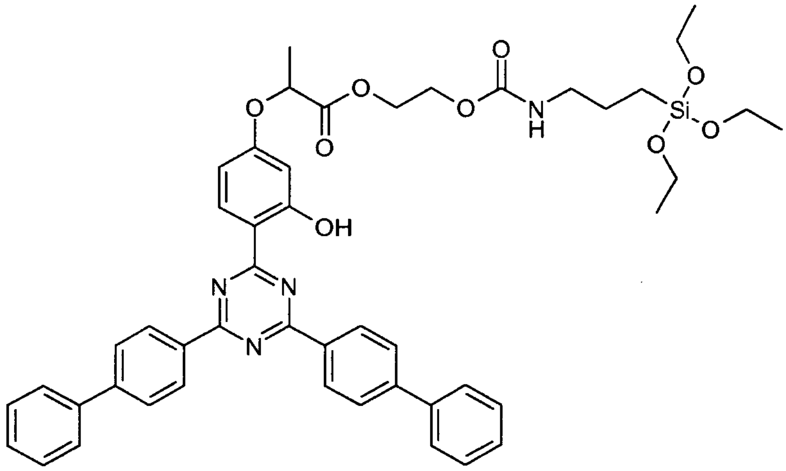

(I.6)

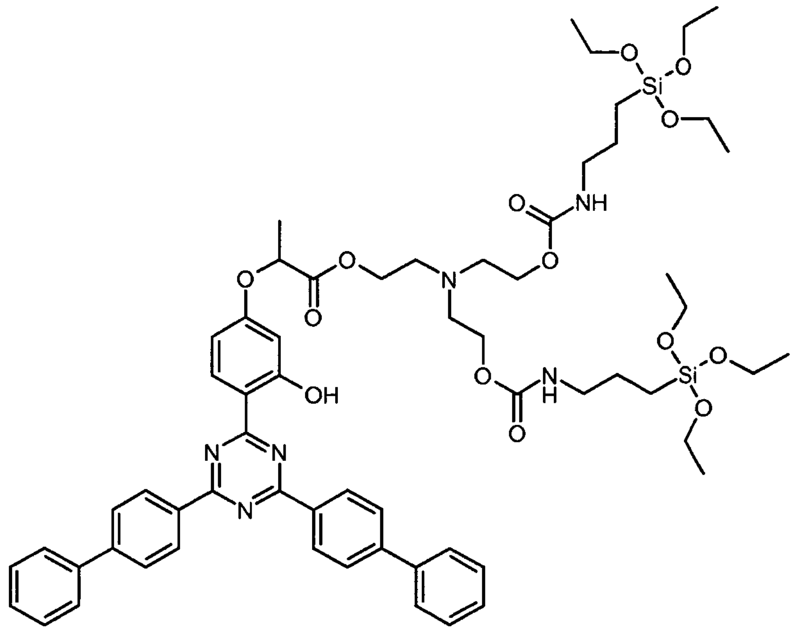

(I.7)

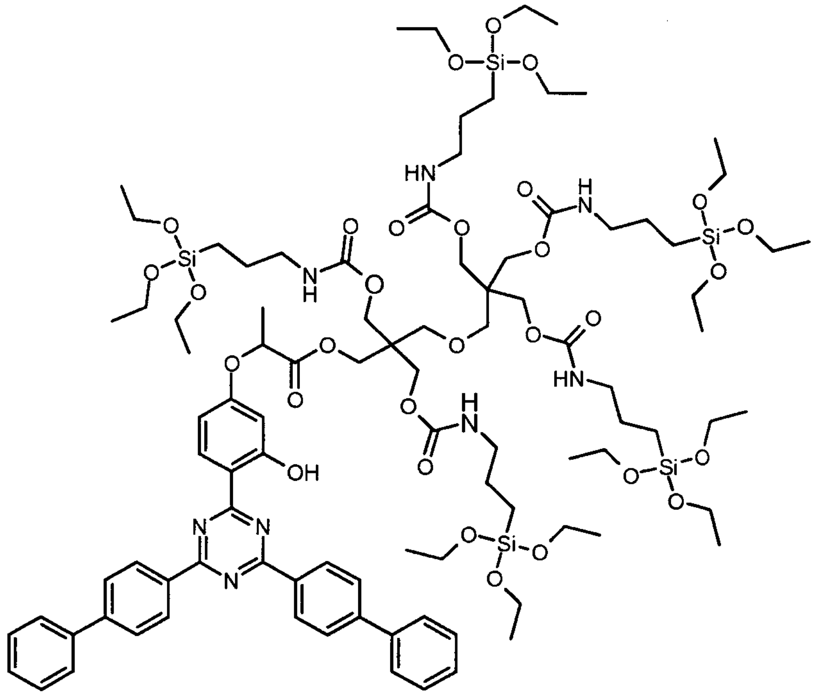

(I.8)

Die Primerschicht kann zusätzlich weitere UV- Absorber verschieden von den Verbindungen der Formel (I) enthalten. Geeignete UV- Absorber sind Derivate der folgenden allgemeinen Gruppen: 2- Hydroxybenzophenone, 2- (2- Hydroxyphenyl) benzotriazole, 2- (2- Hydroxyphenyl)- 1, 3, 5- triazine, Oxalanilide, 2- Cyanacrylate, Benzilidinmalonate und Formamidine oder modifizierte Triazine der allgemeinen Formel (V) .

Beispielhaft aber nicht einschränkend sei hier das allgemeine Herstellverfahren einer Primerzusammensetzung auf Basis des kommerziell erhältlichen SHP470® mit einem Feststoffgehalt von ca. 10% und einer Extinktion von etwa 1, 2 bei 340 nm und einer Schichtdicke von 2 μm von der Firma Momentive Performance Materials Inc., Wilton, CT USA, beschrieben. SHP470® ist ein Haftvermittler auf Polymethylmethacrylatbasis (Komponente (a1) ) unter anderem

mit 1- Methoxy- 2- propanol und Diacetonalkohol als Lösemittel (Komponente (a2) ) und einem Dibenzoylresorcin-Derivat als UV- Absorber (Komponente (a4) ) . Der verdünnte SHP470® (Feststoffgehalt ca. 6 Gew.- %) hat eine Viskosität von > 90 sec gemessen nach DIN EN ISO 2431 bei 23°C und einem 2mm Becher. Dieser Primer wird für die Haftvermittlung zwischen Polycarbonatsubstrat und Polysiloxandecklacken, hier bevorzugt dem AS4700® von Momentive Performance Materials Inc. verwendet. Der SHP470® wird auf 20 bis 95%, besonders bevorzugt auf 25 bis 90%, bevorzugt mit Alkoholen, besonders bevorzugt mit Diacetonalkohol, Methoxypropanol oder Mischungen davon herunter verdünnt, dies ergibt dann einen Feststoffgehalt von ca. 2, 0 Gew.- % bis 9, 5 Gew.- %, bevorzugt 2, 5 Gew.- % bis 9, 0 Gew.- %.

Diese Lösung wird mit 0,01 Gew.-% bis 15,00 Gew.-%, bevorzugt 0,10 Gew.-% bis 10,00 Gew.-%, besonders bevorzugt 3,00 Gew.-% bis 9,00 Gew.-% eines silylierten Triazin-UV-Absorbers der allgemeinen Formel (I) (Komponente (a3)) versetzt und währenddessen und/oder anschließend auf geeignete Weise homogenisiert. Es ist vorteilhaft den UV-Absorber in Diacetonalkohol, Methoxypropanol oder Mischungen daraus zu lösen und so zu dem SHP470® zuzugeben. Das ideale Verdünnungsverhältnis ist abhängig von der Dimension und Geometrie des Bauteils sowie der Lackapplikation und sollte im Einzelfall angepasst werden.

Bei den für die Kratzfestschicht geeigneten Kratzfestlacken handelt es sich um solche Lacke, bei denen der Zusatz von Essigsäure die Ausbildung einer Interpenetrationsschicht mit der Primerschicht bewirkt. Dies sind beispielsweise sogenannte Sol- Gel- Lacke und weitere Hybridlacke, insbesondere Polysiloxanlacke, wie sie beispielsweise aus US 4, 3730, 61, US 4, 410, 594, US 5, 041, 313, oder auch aus US 5, 391, 795 bekannt sind, desweiteren seien hier Silikatbeschichtungen (Wasserglas) , und nanopartikelhaltige Formulierungen genannt. Erfindungsgemäß wird den Kratzfestlacken Essigsäure zugesetzt, sie werden dann auf die Primerschicht aufgebracht und anschließend zu einem gut haftenden mehrschichtigen Erzeugnis ausgehärtet.

Sol- Gel- Lacke im Sinne der vorliegenden Erfindung sind Lacke, die nach dem Sol- Gel- Prozess hergestellt werden. Der Sol- Gel- Prozess ist ein Verfahren zur Synthese nichtmetallischer anorganischer oder hybridpolymerer Materialien aus kolloidalen Dispersionen, den sogenannten Solen.

Hybridlacke im Sinne der vorliegenden Erfindung basieren auf der Verwendung von Hybridpolymeren als Bindemittel. Hybridpolymere (Hybride: lat. "von zweierlei Herkunft") sind polymere Werkstoffe, die Struktureinheiten verschiedener Materialklassen auf molekularer Ebene in sich vereinen. Durch ihren Aufbau können Hybridpolymere völlig neuartigen Eigenschaftskombinationen aufweisen. Im Unterschied zu Verbundwerkstoffen (definierte Phasengrenzen, schwache Wechselwirkungen zwischen den Phasen) und Nanokompositen (Verwendung nanoskaliger Füllstoffe) sind die Struktureinheiten von Hybridpolymeren auf molekularer Ebene miteinander verknüpft. Dies gelingt durch chemische Verfahren wie z. B. den Sol- Gel- Prozess, mit dem anorganische Netzwerke aufgebaut werden können. Durch den Einsatz von organisch reaktiven Precursoren, z. B. organisch modifizierten Metall- Alkoxiden können zusätzlich organische Oligomer/ Polymerstrukturen erzeugt werden. Oberflächenmodifizierte Nanopartikel enthaltende Acrylatlacke, die nach der Härtung ein organisch/ anorganisches Netzwerk bilden, werden ebenfalls als Hybridlack defmiert.

Beispielsweise können Kratzfestlacke aus Sol- Gel Beschichtungslösungen durch Hydrolyse wässriger Dispersionen von kolloidem Siliziumdioxid und einem Organoalkoxysilan oder Mischungen aus Organoallcoxysilanen der allgemeinen Formel RSi $(OR')_3$ herstellt werden, wobei in den Organoalkoxysilan (en) der allgemeinen Formel RSi $(OR')_3$ R für einen monovalenten C1 bis C6- Alkyl- Rest oder für einen ganz oder teilweise fluorierten C1- C6- Alkylrest, für eine Vinyl- oder eine Allyl- Einheit, einen Arylrest oder für ein C1- C6 Alkoxygruppe steht. Besonders bevorzugt ist R eine C1 bis C4- Alkylgruppe, eine Methyl-, Ethyl-, n- Propyl-, iso- Propyl-, tert.- Butyl-, sek.- Butyl- oder n- Butylgruppe, eine Vinyl-, Allyl-, Phenyl- oder substituierte Phenyleinheit. Die- OR' sind unabhängig voneinander ausgewählt aus der Gruppe enthaltend C1 bis C6- Alkoxygruppen, eine Hydroxygruppe, eine Formyleinheit und eine Acetyl- Einheit.

Das kolloide Siliziumdioxid ist beispielsweise als z.B. Levasil® 200 A (HC Starck), Nalco 1034A (Nalco Chemical Co), Ludox® AS-40 oder Ludox® LS (GRACE Davison) erhältlich.

Als Organoalkoxysilane seien beispielhaft folgende Verbindungen genannt: 3, 3, 3- Trifluoropropytrimethoxysilan, Methyltrimethoxysilan, Methyltrihydroxysilan, Methyltriethoxysilan, Ethyltrimethoxysilan, Methyltriacetoxysilan, Ethyltriethoxysilan, Phenyltrialkoxysilan (z.B. Phenyltriethoxysilan und Phenyltrimethoxysilan) und Mischungen daraus.

Als Katalysatoren können beispielsweise organische und/oder anorganische Säuren oder Basen verwendet werden.

In einer Ausführungsform können die kolloiden Siliziumdioxidpartikel auch durch Vorkondensation ausgehend von Alkoxysilanen in situ gebildet werden (siehe hierzu "The Chemistry of Silica", Ralph K. Iler, John Wiley & Sons, (1979), p. 312-461.

Die Hydrolyse der Sol-Gel-Lösung wird durch Zugabe von Lösungsmitteln, bevorzugt alkoholischen Lösungsmitteln wie z.B. Isopropanol, n-Butanol, Isobutanol oder Mischungen daraus, abgebrochen bzw. stark verlangsamt.

Des weiteren können auch die Kratzfestlacke noch Additive und/oder Stabilisatoren wie beispielsweise Verlaufsmittel, Oberflächenadditive, Verdickungsmittel, Pigmente, Farbstoffe, Härtungskatalysatoren, IR-Absorber, UV-Absorber und/oder Haftvermittler zugesetzt werden. Auch die Verwendung von Hexamethyl-disilazan oder vergleichbaren Verbindungen, die zu einer reduzierten Rissanfälligkeit der Beschichtungen führen können, ist möglich (vgl. auch WO 2008/109072 A).

In einer Ausführungsform sind zusätzlich silylierte UV-Absorber, z.B. auch solche Verbindungen der Formel (I), enthalten.

Siloxanbasierte Sol-Gel-Kratzfestlacke sind beispielsweise von der Fa. Momentive Performance Materials unter den Produktbezeichnungen AS4000®, AS4700®, PHC587® und PHC587B® erhältlich.

Erfindungsgemäß wird den Kratzfestlack-Formulierungen Essigsäure zugesetzt. Die Kratzfestlacke werden dann auf die Primerschicht aufgebracht und anschließend zu einem gut haftenden mehrschichtigen Erzeugnis ausgehärtet. Das spezifische Herstellverfahren für die erfindungsgemäßen Lackformulierungen ist natürlich abhängig von dem verwendeten kommerziellen Primer. Die Einarbeitung der Essigsäure erfolgt vorzugsweise durch Zugabe von 0,1 % - 15,0 %, bevorzugt 0,5 % - 10,0 % und besonders bevorzugt 1,0 - 8,0 % Eisessig (100%iger Essigsäure) und anschließender Homogenisierung durch Rühren oder Umpumpen.

Alternativ oder zusätzlich können auch andere organische oder mineralische Säuren verwendet werden, die in der Lage sind, die Primerschicht anzulösen.

Primerzusammensetzung und Kratzfestlack können nach gängigen Verfahren auf die entsprechenden Substrate enthaltend die Basisschicht appliziert und danach unter geeigneten Bedingungen aushärtet werden. Die Applikation kann beispielsweise durch Tauchen, Fluten, Sprühen, Rakeln, Gießen oder Streichen erfolgen; danach wird jeweils gegebenenfalls vorhandenes Lösungsmittel verdampft und die Beschichtung bei Raumtemperatur oder erhöhter Temperatur bzw. durch UV-Licht ausgehärtet. Angaben zur Applikation nach gängigen Methoden finden sich beispielsweise in Organic Coatings: Science and Technology, John Wiley & Sons 1994, Kapitel 22, Seiten 65-82.

Die Primerschicht (en) können wahlweise nach dem Ablüften an Raumtemperatur bei erhöhter Temperatur eingebrannt werden (bake- on- bake Verfahren) oder direkt mit der Sol- Gel Lösung überbeschichtet werden (wet- on-wet Verfahren) .

Die erfindungsgemäßen Mehrschichtsysteme können überall dort eingesetzt werden, wo ein UV-labiles Substrat vor UV-Strahlung, in erster Linie aus dem Sonnenlicht oder aus einer künstlichen Strahlenquelle, dauerhaft geschützt werden soll. Viele Kunststoffe können durch die erfindungsgemäßen Beschichtungen dauerhaft vor photochemischem Abbau geschützt werden. Die Beschichtung von Glas, die ebenfalls möglich ist, dient hingegen nicht dem Schutz des Substrats, sondern der Abschirmung von langwelliger UV-Strahlung (≥300 nm), welche z.B. handelsübliches Fensterglas nahezu vollständig durchdringt.

Derart dauerhaft geschützte thermoplastischen Kunststoffe, insbesondere Polycarbonate, können beispielsweise für die Verglasung von Gebäuden und Fahrzeugen eingesetzt werden, wo über lange Zeiträume eine Vergilbung verhindert werden muss und eine gute Haftung der Schichten untereinander notwendig ist, um Rissbildungen zu vermeiden.

Im Falle thermoplastischer Kunststoffe können vor allem extrudierte als auch spritzgegossene Formkörper beschichtet werden, beispielsweise in Form von Folien, coextrudierten Folien, Platten, Stegplatten sowie überwiegend flächigen Substraten. Anwendungsbereiche finden sich auch im Bereich von 1K- bzw. 2K-Spritzgussteilen, beispielsweise in Form von Scheinwerferabdeckscheiben, von Architektur - und von Automobilverscheibungen.

Je nach Anwendung werden Primer - (Pr) und / oder Kratzfestschichten (Kr) zweckmäßiger Weise auf einer oder mehreren Seiten der Basisschichten (B) aufgebracht. Flächenförmige Substrate wie Folien oder Platten können dementsprechend einseitig oder zweiseitig beschichtet sein. Erfindungsgemäß kommt es dabei zwischen Primer - und Kratzfestschicht zur Ausbildung einer Interpenetrationsschicht (IPL). Die erfindungsgemäßen Mehrschichtsysteme enthalten daher bevorzugt die Schichtabfolgen

(B) - (Pr) - (IPL) - (Kr)
(Kr) - (B) - (Pr) - (IPL) - (Kr)
(Kr) - (IPL) - (Pr) - (B) - (Pr) - (IPL) - (Kr).

In einer bevorzugten Ausführungsform ist das Schichtdickenverhältnis von Interpenetrationsschicht (IPL) zu Kratzfestschicht (Kr) $\geq$ 10%, besonders bevorzugt $\geq$ 12% und/oder $\geq$ 15%.

Die Mehrschichtsysteme können außerdem weitere funktionelle oder dekorative Schichten enthalten. Neben den Primer- und Kratzfestschichten kommen als weitere Beschichtungen beispielsweise IR- absorbierende Schichten, IR- reflektierende Schichten, elektrisch leitfähige Schichten, elektroluminisizierende Schichten, Farb- und Druckschichten zu Dekorationszwecken, elektrisch leitfähige Druckschichten, wie sie z.B. für Automobilscheibenheizung verwendet werden, gegebenenfalls auch Heizdrähte enthaltende Schichten, Antireflexionsschichten, no- drop- Beschichtungen, anti- fog- Beschichtungen, antifmgerprint- Beschichtungen und/ oder Kombinationen davon in betracht. Diese Beschichtungen können als Zwischenschichten und/ oder Außenschichten aufgebracht bzw. enthalten sein. Solche Schichten können beispielsweise durch Coextrusionsverfahren, Lamination oder Lackbeschichtung aufgebracht werden.

Überdies können die Mehrschichtsysteme auf ihren Außenseiten mit weiteren Beschichtungen überlackiert werden, was beispielsweise der weiteren Verbesserung der mechanischen Eigenschaften (Kratzfestigkeit) dienen kann. Ebenfalls ist es möglich, eine Plasmaschicht aufzubringen, die einen zusätzlichen Barriere- und Kratzschutz bieten kann. Diese Plasmaschicht wird durch Abscheidung reaktiver Spezies nach Stand der Technik appliziert - beispielsweise Plasma enhanced chemical vapor deposition PCVD oder Magnetronsputtern (z.B. US-A 2007/104956).

Die folgenden Ausführungsbeispiele sollen die Erfindung erläutern, ohne sie jedoch einzuschränken.

**Beispiele**

**a) Prüfmethoden**

**Feststoffgehaltsbestimmung (Methode A)**

Der Feststoffgehalt der Lacke wurde mit Hilfe des Feststofftesters Sartorius MA40 bestimmt, wobei eine eingewogene Lackprobe so lange bei 110°C eingedampft wurde, bis Massekonstanz erreicht wurde. Der Feststoffgehalt ergibt sich dann in Prozent aus dem Quotienten Masse zu Masse von dem Eindampfen. Der Feststoffgehalt des Lackes nach Härten des Lackes beträgt hierbei im einfachsten Fall Lackgewicht abzüglich Lösungsmittelgewicht.

**Schichtdickenbestimmung (Methode B)**

Die Schichtdicken der gehärteten Lacke bzw. die Gesamtschichtdicken der Lacke werden über Weißlichinterferenz mit Hilfe des Messgerätes Eta SD 30 der Firma Eta Optik GmbH, Deutschland, bestimmt.

**Trübungsmessung (Methode C)**

Die Trübungen der beschichteten PC-Platten wurden gemäß ASTM D 1003 mit einem Haze Gard Plus der Firma Byk-Gardner bestimmt. Als Messpunkt wurde eine Gesamtschichtdicke von ca. 6 μm bestimmt über Weißlichtinterferenz festgelegt.

**Bestimmung der Schichtdicke der Interpenetrationsschicht (IPL) (Methode D)**

Die Bestimmung der Schichtdicken des Kratzschutzlackes, der Interpenetrationsschicht und der Primer erfolgte anhand von Transmissionselektronenmikroskopmessungen (Dünnschnitt, Ultramikrotomie) an einem EM 208 der Firma FEI, USA. Die Messungen erfolgten ebenfalls bei ca. 6μm Gesamtschichtdicke bestimmt über Weißlichtinterferenz.

**Extinktionsmessung (Methode E)**

Um die UV-absorbierende Wirkung der Primerschichten miteinander vergleichen zu können, wurde jeweils die Transmission im Bereich zwischen 200 und 500 nm in 5 nm Schritten an einem PELambda900, Photometerkugel 0°/diffus an einer mit der jeweiligen Primerlösung beschichteten PC-Platte aus UV-stabilisiertem Makrolon® 2808 (Bayer MaterialScience AG; mittelviskoses Bisphenol A-Polycarbonat, MVR 10g/10min nach ISO 1133 bei 300°C und 1,2kg, ohne UV-Stabilisierung) bestimmt. Um aus dem Ergebnis die Extinktion der reinen Primerschichten zu erhalten, wurde von der aus der Transmission berechneten Gesamtextinktion der PC-Platte und Primerschicht die Extinktion der PC-Platte (Nullwert) abgezogen.

Es werden die Extinktionswerte für eine Wellenlänge von 340 nm angegeben, da Polycarbonat in diesem Bereich besonders empfindlich gegenüber UV-Licht ist und somit eine hohe Extinktion benötigt wird.

Die Extinktion der Primerschicht lässt sich über folgende Gleichung aus der Transmission berechnen:

Extinktion der Primerschicht (%):

$$E = \log_{10}(100/(\text{Transmission PC-Platte + Primerschicht [\%]}) / (\text{Transmission reine PC-Platte [\%]}))$$

**b) Eingesetzte UV-Absorber:**

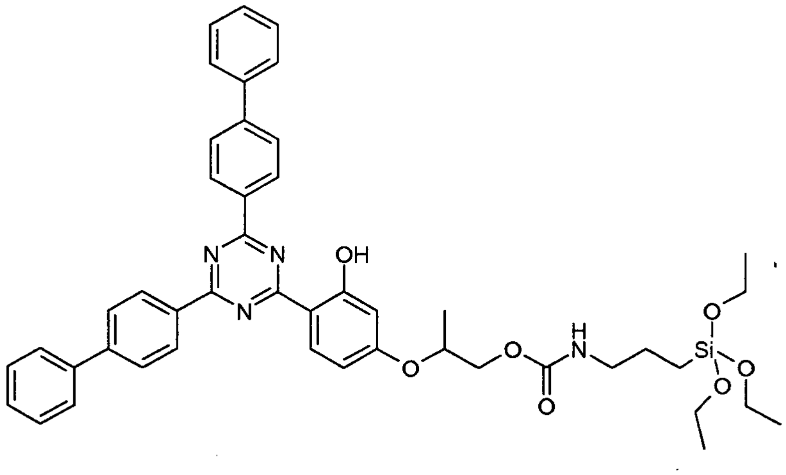

(**I.1**)

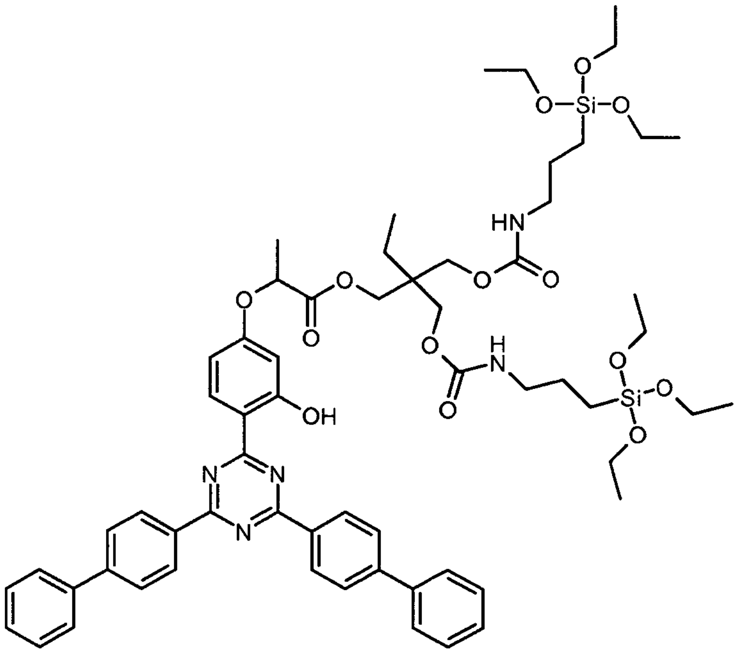

(**I.2**)

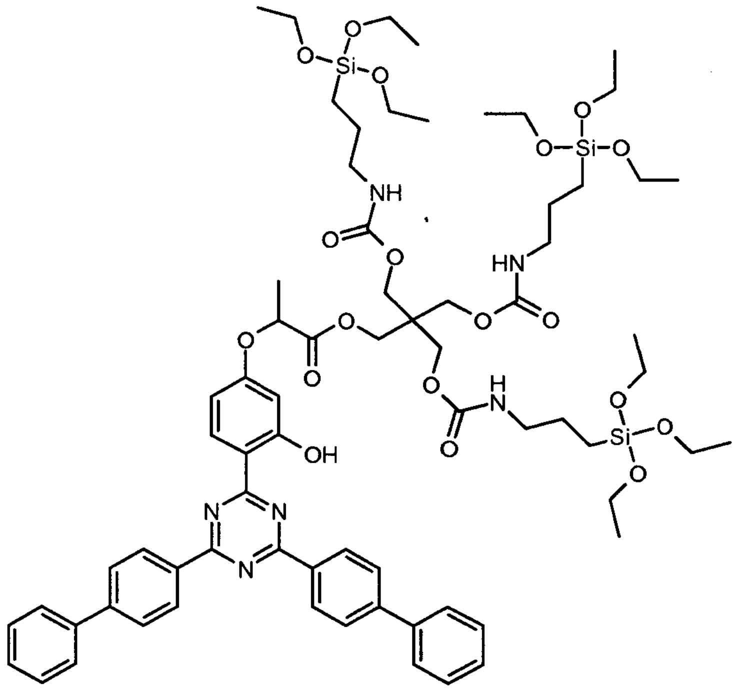

(I.3)

**c) Herstellung der Stammlösung A für die Primerschicht**

Von dem kommerziell erhältlichen Dickprimer SHP 470® (Momentive Performance Materials Inc. Wilton, CT USA) wurde nach Methode A ein Feststoffgehalt von 10,5% bestimmt.

Um innerhalb der Schichtdickenspezifikation des Herstellers zu liegen, muss dieser Lack mit einem Lösungsmittelgemisch Diacetonalkohol : 1- Methoxy- 2- propanol 1: 1 verdünnt werden. Hierzu wurde zu dem kommerziell erhältlichen Dickprimer SHP 470® so viel Lösungsmittel zugegeben, dass nach Methode A anschließend von dem verdünnten SHP 470® (Stammlösung A) ein Feststoffgehalt von 5, 9 % bestimmt wurde (Mengenangaben) .

**d) Herstellung der Kratzfestlacke (A1-E1)**

Als Kratzschutzlack wurden wahlweise ein AS4700® (UV- absorberhaltiger, polysiloxanbasierter Kratzschutzlack von Momentive Performance Materials Inc. Wilton, CT USA) **(A1)** oder mit Essigsäure angesäuerte Lösungen des AS4700® verwendet.

Hierzu wurden zu 24,50g AS4700® **(A1)** unter Rühren 0,50g Eisessig (100% Essigsäure) zugegeben, so dass eine Kratzschutz-Lacklösung **B1** mit 2,0 Gew.-% Essigsäurezusatz bezogen auf die Gesamtmenge der Lacklösung erhalten wurde.

Zu weiteren 24,12g AS4700® **(A1)** wurden unter Rühren 0,88g Eisessig (100% Essigsäure) zugegeben, so dass eine Kratzschutz-Lacklösung **C1** mit 3,5 Gew.-% Essigsäurezusatz bezogen auf die Gesamtmenge der Lacklösung erhalten wurde.

Zu weiteren 23,75g AS4700® **(A1)** wurden unter Rühren 1,25g Eisessig (100% Essigsäure) zugegeben, so dass eine Kratzschutz-Lacklösung **D1** mit 5,0 Gew.-% Essigsäurezusatz bezogen auf die Gesamtlmenge der Lacklösung erhalten wurde.

**e) Herstellung der Mehrschichtsysteme**

**Beispiele 1a-1d (Vergleichsversuche)**

Zu 33,3 g der Stammlösung A wurden unter Rühren 0,1 g des UV-Absorbers Tinuvin® 479 (Ciba, Schweiz) zugegeben, wodurch die Primerlösung **1A** mit 5 Gew.-% Tinuvin® 479 bezogen auf den experimentell ermittelten Feststoffgehalt von A mit 5,9 % erhalten wurde. Anschließend wurde die Lacklösung über eine Drucknutsche filtriert (2-4

μm Cellulosefilter).

Diese Primerlösung **1A** wurde im Flutverfahren auf Polycarbonatplatten (spritzgegossene Polycarbonat (PC)-Platten in optischer Qualität aus Makrolon® AL 2647 (mittelviskoses Bisphenol A- Polycarbonat mit UV- Stabilisator und Formtrennmittel; MFR 13 g/ 10min nach ISO1133 bei 300°C und 1, 2 kg) der Größe 10 x 15 x 0, 32 cm aufgebracht, 15 min. abgelüftet und 15 min. bei 125°C gehärtet.

Die mit der Primerlösung **1A** geprimerten PC-Platten wurden anschließend mit AS4700® **(A1)** oder den Kratzschutz-Lacklösungen **B1, C1** oder **D1** im Flutverfahren überbeschichtet, 30 min. abgelüftet und 60 min. bei 130°C gehärtet (Beispiele 1a-1d)

Die Schichtdicken des Primers und des Kratzschutzlackes bzw. die Gesamtschichtdicke an den hergestellten Mehrschichtsystemen (Beispiele 1a - 1 d) wurden nach Methode B bestimmt und beträgt ca. 3 - 7 μm. An einem Punkt, wo die Gesamtschichtdicke ca. 6 μm beträgt, wurde nach Methode C die Trübung der beschichteten Polycarbonatplatte gemessen und anschließend in dem Schichtdickenbereich anhand eines Dünnschnittes nach Methode D die exakten Schichtdicken der Primer-, Interpenetrations- und Kratzschutzschicht bestimmt.

Zum besseren Vergleich werden in Tab. 1 die Schichtdicken prozentual zur Gesamtschichtdicke des Lackes angeben, d.h. angegeben wird der Quotient aus der jeweiligen Schichtdicke (Primer/IPL oder Kratzschutzlack) und der Gesamtschichtdicke.

Tab. 1. Trübung und Schichtdicken der Beispiele 1a - 1d (Primerschicht enthaltend Tinuvin® 479)

| **Beispiel** | **Kratzfestlack** | **Trübung bei 6 μm** | **Schichtdicke Primer (P) [%]** | **Schichtdicke IPL [%]** | **Schichtdicke Kratzfestlack (Kr) [%]** |
|---|---|---|---|---|---|
| 1a | A1 | 0,3 | 28,8 | 5,8 | 65,4 |
| 1b | B1 | 1,3 | 22,2 | 12,2 | 65,8 |
| 1c | C1 | 2,9 | 24,7 | 15,8 | 59,5 |
| 1d | D1 | 3,9 | 20,4 | 22,5* | 57,1* |
| * Werte grob abgeschätzt, da keine exakte Trennung zwischen IPL und Kratzfestlack mehr erkennbar. | | | | | |

**Beispiele 2a - 2d (erfindungsgemäß)**

Zu 33,3g der Stammlösung A wurden unter Rühren 0,1g des UV-Absorbers der Formel **I.2** zugegeben, wodurch die Lacklösung 2A mit 5 Gew.-% UV-Absorber der Formel **I.2** bezogen auf den experimentell ermittelten Feststoffgehalt von A mit 5,9 % erhalten wurde. Anschließend wurde die Lacklösung über eine Drucknutsche filtriert (2-4 μm Cellulosefilter).

Diese Primerlösung 2A wurde im Flutverfahren auf Polycarbonatplatten (spritzgegossene Polycarbonat (PC)-Platten in optischer Qualität aus Makrolon® AL 2647 (mittelviskoses Bisphenol A- Polycarbonat mit UV- Stabilisator und Formtrennmittel; MFR 13 g/ 10min nach ISO1133 bei 300°C und 1, 2 kg) der Größe 10 x 15 x 0, 32 cm aufgebracht, 15 min. abgelüftet und 15 min. bei 125°C gehärtet.

Die geprimerten PC-Platten wurden anschließend mit AS4700® **(A1)** oder den Kratzschutz-Lacklösungen **B1, C1** oder **D1** im Flutverfahren überbeschichtet, 30 min. abgelüftet und 60 min. bei 130°C gehärtet (Beispiele 2a - 2d).

Die Dicken der Schichten von den Mehrschichtsystemen der Beispiele 2a - 2d werden wie bei den Beispielen 1 a - 1 d bestimmt. Zum besseren Vergleich werden in Tab. 2 die Schichtdicken prozentual zur Gesamtschichtdicke des Lackes angeben, d.h. angegeben wird der Quotient aus der jeweiligen Schichtdicke (Primer/IPL oder Kratzschutzlack) und der Gesamtschichtdicke.

Tab. 2: Trübung und Schichtdicken der Beispiele 2a-2d (Primerschicht enthaltend **I.2)**

| **Beispiele** | **Kratzfestlack** | **Trübung bei 6μm** | **Schichtdicke Primer (P) [%]** | **Schichtdicke IPL [%]** | **Schichtdicke Kratzfestlack (Kr) [%]** |
|---|---|---|---|---|---|
| 2a | A1 | 0,2 | 25,2 | 6,4 | 68,4 |
| 2b | B1 | 0,2 | 19,1 | 14,4 | 66,5 |
| 2c | C1 | 0,3 | 19,4 | 14,7 | 65,9 |
| 2d | D1 | 0,2 | 22,2 | 19,7 | 58,1 |

Man erkennt eindeutig, dass die Schichtdicken der Interpenetrationsschicht (IPL) mit zunehmender Essigsäurekonzentration im Kratzfestlack ansteigen. Je größer die IPL, desto besser die Vernetzung/Haftung der beiden Schichten. Im Unterschied zeigen die erfindungsgemäßen Beispiele 2 a - d) enthaltend den UV-Absorber der Formel **I.2** deutlich niedrigere Trübungen bei vergleichbaren IPL-schichtdicken als die Beispiele 1 a - d), enthaltend den herkömmlichen UV-Absorber Tinuvin® 479, d.h. es kann durch eine größere IPL eine bessere Haftung erzielt werden, ohne dass das Mehrschichtsystem eintrübt.

**Versuche mit gleichen Stoffmengen an Triazin UV-Absorbern**

Es wurden zusätzlich Versuche mit gleichen Stoffmengenzugaben an UV-Absorber durchgeführt, um vergleichbare Extinktionen zu erhalten. Hierbei wurde die Extinktion der Primerschichten bei 2 μm einzeln vermessen, da nicht auszuschließen ist, dass manche UV-Absorber weniger gut löslich als andere sind. Diese Messungen wurden auf einer Basisschicht aus nicht UV-stabilisiertem Makrolon® 2808 durchgeführt. Die Trübungsmessungen wurden am Gesamtaufbau mit Primerschicht und Kratzschutzlack bei 6 μm Gesamtschichtdicke bestimmt. Da die IPL-Schichtdicke nicht vom zugesetzten UV-Absorber, sondern von dem Essigsäuregehalt des Kratzschutzlackes bzw. der Kratzschutzlacklösung abhängt, und somit jeweils bei gleicher Essigsäurekonzentration vergleichbar sind, wurden keine weiteren TEM Aufnahmen durchgeführt.

Als Kratzschutzlack wurde, wie in den Beispielen 1 und 2, wahlweise der AS4700® (UVabsorberhaltiger, polysiloxanbasierter Kratzschutzlack von Momentive Performance Materials) oder mit Essigsäure angesäuerte Lösungen des AS4700® verwendet. Für die Beispiele 3 bis 7 wurde eine neue Charge AS4700® (A2) verwendet. Da Sol-Gel Lacke altern, dürfen nur gleiche Chargen miteinander verglichen werden.

Hierzu wurden zu 24,50g AS4700® (**A2**) unter Rühren 0,50 g Eisessig (100% Essigsäure) zugegeben, so dass eine Kratzschutz-Lacklösung **B2** mit 2,0 Gew.-% Essigsäurezusatz bezogen auf die Gesamtlackmenge erhalten wurde.

Zu weiteren 24,12g AS4700® **(A2)** wurden unter Rühren 0,88g Eisessig (100% Essigsäure) zugegeben, auf dass eine Kratzschutz-Lacklösung **C2** mit 3,5 Gew.-% Essigsäurezusatz bezogen auf die Gesamtlackmenge erhalten wurde.

Zu weiteren 23,75g AS4700® **(A2)** wurden unter Rühren 1,25g Eisessig (100% Essigsäure) zugegeben, auf dass eine Kratzschutz-Lacklösung **D2** mit 5,0 Gew.-% Essigsäurezusatz bezogen auf die Gesamtlackmenge erhalten wurde.

**Beispiele 3a-3e (erfindungsgemäß):**

Zu 100,0g der Stammlösung A wurden unter Rühren 0,35 g des UV-Absorbers der Formel **I.1** zugegeben, wodurch die Primerlösung 3A mit 5,6 Gew.-% UV-Absorber (0,44 mmol) der Formel **I.1** bezogen auf den experimentell ermittelten Feststoffgehalt von A mit 5,9 % erhalten wurde. Anschließend wurde die Lacklösung über eine Drucknutsche filtriert (2-4 μm Cellulosefilter).

Diese Primerlösung 3A wurde im Flutverfahren auf Polycarbonatplatten (spritzgegossenes Polycarbonat (PC)-Platten in optischer Qualität aus Makrolon® 2808 (Bayer MaterialScience AG; mittelviskoses Bisphenol A- Polycarbonat, MVR 10g/ 10min nach ISO 1133 bei 300°C und 1, 2kg) , ohne UV- Stabilisierung) der Größe 10 x 15 x 0, 32 cm) aufgebracht, 15 min. abgelüftet und 15 min. bei 125°C gehärtet.

**Beispiele 3a - 3d:** Die geprimerten PC-Platten wurden anschließend mit AS4700® (**A2**) oder den Kratzschutz-Lacklösungen **B2, C2** oder **D2** im Flutverfahren überbeschichtet, 30 min. abgelüftet und 60 min. bei 130°C gehärtet.

Die Gesamtdicke aus Primerschicht, IPL und Kratzfestschicht an den Mehrschichtsystemen der Beispiele 3a - 3d wurde nach Methode B bestimmt. Herstellungsbedingt variiert die Dicke über den Verlauf der Platte von 3 - 7 μm. An einem Punkt, wo die Gesamtschichtdicke ca. 6 μm beträgt, wurde nach Methode C die Trübung der beschichteten Polycarbonatplatte gemessen (Tab. 3).

Tab. 3: Trübung und Schichtdicken der Beispiele 3a-3d (Primerschicht enthaltend **I.I)**

| **Beispiel** | **Kratzfestlack** | **Trübung bei 6μm** |
|---|---|---|
| 3a | AS4700® (**A2**) | 0,4 |
| 3b | **B2** | 0,3 |
| 3c | **C2** | 0,4 |
| 3d | **D2** | 0,3 |

**Beispiel 3e:** An den mit der Primerlösung 3A geprimerten Platten wurde die Schichtdicke der Primerschicht

nach Methode B bestimmt. An einem Punkt, wo die Gesamtschichtdicke ca. 2 μm beträgt, wurde nach Methode C die Trübung der beschichteten Polycarbonatplatte gemessen Die Extinktion und Transmission der geprimerten Platten (ohne Kratzfestschicht) wurde nach Methode E gemessen und bestimmt und ist in Tab. 7 gezeigt.

**Beispiele 4a - 4e (erfindungsgemäß):**

Zu 100,0g der Stammlösung A wurden unter Rühren 0,52g des UV-Absorbers der Formel **I.2** zugegeben, wodurch die Primerlösung **4A** mit 8,1 Gew.-% UV-Absorber (0,44mmol) der Formel **I.2** bezogen auf den experimentell ermittelten Feststoffgehalt von A mit 5,9% erhalten wurde. Anschließend wurde die Lacklösung über eine Drucknutsche filtriert (2-4 μm Cellulosefilter).

Diese Primerlösung **4A** wurde im Flutverfahren auf Polycarbonatplatten (spritzgegossene Polycarbonat (PC)-Platten in optischer Qualität aus Makrolon® 2808 (Bayer MaterialScience AG; mittelviskoses Bisphenol A- Polycarbonat, MVR 10g/ 10min nach ISO 1133 bei 300°C und 1, 2kg) , ohne UV- Stabilisierung) der Größe 10 x 15 x 0, 32 cm aufgebracht, 15 min. abgelüftet und 15 min. bei 125°C gehärtet.

**Beispiele 4a - 4d:** Die geprimerten PC-Platten wurden anschließend mit AS4700® (A2) oder den Kratzschutz-Lacklösungen **B2,** C2 oder D2 im Flutverfahren überbeschichtet, 30 min. abgelüftet und 60 min. bei 130°C gehärtet.

Die Gesamtdicke aus Primerschicht, IPL und Kratzfestschicht an den Mehrschichtsystemen der Beispiele 4a - 4d wurden nach Methode B bestimmt. Herstellungsbedingt variiert die Dicke über den Verlauf der Platte von 3 - 7 μm. An einem Punkt, wo die Gesamtschichtdicke ca. 6 μm beträgt, wurde nach Methode C die Trübung der beschichteten Polycarbonatplatte gemessen (Tab. 4).

Tab. 4: Trübung und Schichtdicken der Beispiele 4a-4d (Primerschicht enthaltend **I.2)**

| **Beispiel** | **Kratzfestlack** | **Trübung bei 6μm** |
|---|---|---|
| 4a | AS4700® (**A2**) | 0,2 |
| 4b | **B2** | 0,2 |
| 4c | **C2** | 0,2 |
| 4d | **D2** | 0,4 |

**Beispiel 4e:** An den mit der Primerlösung **4A** geprimerten Platten wurde die Schichtdicke der Primerschicht nach Methode B bestimmt. An einem Punkt, wo die Schichtdicke ca. 2 μm beträgt, wurde die Extinktion und Transmission der geprimerten Platten (ohne Kratzfestschicht) nach Methode E gemessen und bestimmt (Tab. 7).

**Beispiele 5a - 5e (erfindungsgemäß):**

Zu 100,0g der Stammlösung A wurden unter Rühren 0,63g des UV-Absorbers der Formel **I.3** zugegeben, wodurch die Primerlösung **5A** mit 9,6 Gew.-% UV-Absorber (0,44mmol) der Formel I.4 bezogen auf den experimentell ermittelten Feststoffgehalt von A mit 5,9% erhalten wurde. Anschließend wurde die Lacklösung über eine Drucknutsche filtriert (2-4 μm Cellulosefilter).

Diese Primerlösung **5A** wurde im Flutverfahren auf Polycarbonatplatten (spritzgegossene Polycarbonat (PC)-Platten in optischer Qualität aus Makrolon® 2808 (Bayer MaterialScience AG; mittelviskoses Bisphenol A- Polycarbonat, MVR 10g/ 10min nach ISO 1133 bei 300°C und 1, 2kg) , ohne UV- Stabilisierung) der Größe 10 x 15 x 0, 32 cm aufgebracht, 15 min. abgelüftet und 15 min. bei 125°C gehärtet.

**Beispiele 5a-5d:** Die geprimerten PC-Platten wurden anschließend mit AS4700® (**A2**) oder den Kratzschutz-Lacklösungen **B2,** C2 oder **D2** im Flutverfahren überbeschichtet, 30 min. abgelüftet und 60 min. bei 130°C gehärtet.

Die Gesamtdicke aus Primerschicht, IPL und Kratzfestschicht an den Mehrschichtsystemen der Beispiele 5a - 5d wurden nach Methode B bestimmt. Herstellungsbedingt variiert die Dicke über den Verlauf der Platte von 3 - 7 μm. An einem Punkt, wo die Gesamtschichtdicke ca. 6 μm beträgt, wurde nach Methode C die Trübung der beschichteten Polycarbonatplatte gemessen (Tab. 5).

Tab. 5: Trübung und Schichtdicken der Beispiele 5a-5d (Primerschicht enthaltend **I.3)**

| **Beispiel** | **Kratzfestlack** | **Trübung bei 6μm** |
|---|---|---|
| 5a | AS4700® (**A2**) | 0,9 |
| 5b | **B2** | 0.9 |

(fortgesetzt)

| Beispiel | Kratzfestlack | Trübung bei 6μm |
|---|---|---|
| 5c | **C2** | 1,5 |
| 5d | **D2** | 2,4 |

**Beispiel 5e:** An den mit der Primerlösung **5A** geprimerten Platten wurde die Schichtdicke der Primerschicht nach Methode B bestimmt. An einem Punkt, wo die Schichtdicke ca. 2 μm beträgt, wurde die Extinktion und Transmission der geprimerten Platten (ohne Kratzfestschicht) wurde nach Methode E gemessen und bestimmt (Tab. 7).

**Beispiele 6a - 6e (nicht erfindungsgemäß):**

Zu 100,0g der Stammlösung A wurden unter Rühren 0,3g des UV-Absorbers Tinuvin® 479 zugegeben, wodurch die Primerlösung **6A** mit 4,8 Gew.-% UV-Absorber (0,44mol) Tinuvin® 479 bezogen auf den experimentell ermittelten Feststoffgehalt von A mit 5,9% erhalten wurde. Anschließend wurde die Lacklösung über eine Drucknutsche filtriert (2-4 μm Cellulosefilter).

Diese Primerlösung **6A** wurde im Flutverfahren auf Polycarbonatplatten (spritzgegossene Polycarbonat (PC)-Platten in optischer Qualität aus Makrolon® 2808 (Bayer MaterialScience AG; mittelviskoses Bisphenol A- Polycarbonat, MVR 10g/ 10min nach ISO 1133 bei 300°C und 1, 2kg) , ohne UV- Stabilisierung) der Größe 10 x 15 x 0, 32 cm aufgebracht, 15 min. abgelüftet und 15 min. bei 125°C gehärtet.

Die geprimerten PC-Platten wurden anschließend mit AS4700® (**A2**) oder den Kratzschutz-Lacklösungen **B2, C2** oder **D2** im Flutverfahren überbeschichtet, 30 min. abgelüftet und 60 min. bei 130°C gehärtet.

Die Gesamtdicke aus Primerschicht, IPL und Kratzfestschicht an den Mehrschichtsystemen der Beispiele 6a - 6d wurden nach Methode B bestimmt. Herstellungsbedingt variiert die Dicke über den Verlauf der Platte von 3 - 7 μm. An einem Punkt, wo die Gesamtschichtdicke ca. 6 μm beträgt, wurde nach Methode C die Trübung der beschichteten Polycarbonatplatte gemessen (Tab. 6).

Tab. 6: Trübung und Schichtdicken der Beispiele 6a-6d (Primerschicht enthaltend **Tinuvin® 479**)

| Primer | Kratzfestlack | Trübung bei 6μm |
|---|---|---|
| 6a | AS4700® (**A2**) | 0,3 |
| 6b | B2 | 0,6 |
| 6c | C2 | 1,6 |
| 6d | D2 | 3,7 |

**Beispiel 6e:** An den mit der Primerlösung **6A** geprimerten Platten wurde die Schichtdicke der Primerschicht nach Methode B bestimmt. An einem Punkt, wo die Schichtdicke ca. 2 μm beträgt, wurde die Extinktion und Transmission der geprimerten Platten (ohne Kratzfestschicht) nach Methode E gemessen und bestimmt (Tab. 7).

**Tabelle 7. Transmissions- / Extinktionswerte bei 340nm der Primerschichten 3A - 6A:**

| Primerlösung | Extinktion Primer [%] |
|---|---|
| 3A | 1,7 |
| 4A | 1,9 |
| 5A | 1,7 |
| 6A | 1,8 |

**Fazit:** Durch gleichen Stoffmengenzusatz an UV-Absorbers werden für die Beispiele gleiche Extinktionen erzielt. Bei Zusatz von Essigsäure trüben die nicht erfindungsgemäßen Beispiele im Gegensatz zu den erfindungsgemäßen Beispielen deutlich ein.

**Patentansprüche**

1. Mehrschichtsystem, enthaltend eine Basisschicht aus einem thermoplastischem Kunststoff, eine Primerschicht und eine Kratzfestschicht aus einem Kratzfestlack, wobei die Primerschicht einen silylierten UV-Absorber auf Triazinbasis enthält und die Kratzfestschicht aus einem Kratzfestlack enthaltend Säure hergestellt wird.

2. Mehrschichtsystem gemäß Anspruch 1, wobei die Kratzfestschicht aus einem Kratzfestlack enthaltend 0,1 % - 15,0 %, bevorzugt 0,5 % - 10,0 % und besonders bevorzugt 1,0 - 8,0 % Essigsäure hergestellt wird.

3. Mehrschichtsystem gemäß Anspruch 1 oder 2, wobei der silylierte UV-Absorber auf Triazinbasis eine UV-absorbierende Verbindung aus der Gruppe enthaltend die Verbindungen der allgemeinen Formel (I)

$$A - X(- T\text{-}Q\text{-}P)_n \qquad (I),$$

wobei
A für

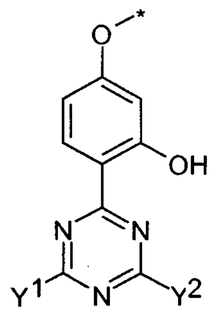

steht, worin
$Y^1$ und $Y^2$ unabhängig voneinander Substituenten mit den generellen Formeln

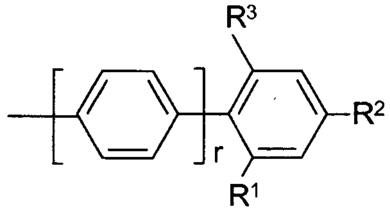

sind, wobei
r gleich 0 oder 1 ist,
$R^1$, $R^2$, $R^3$ unabhängig voneinander H, OH, C1-20 Alkyl, C4-12 Cycloalkyl, C2-20 Alkenyl, C1-20 Alkoxy, C4-12 Cycloalkoxy, C2-20 Alkenyloxy, C7-20 Aralkyl, Halogen, -C≡N, C1-5 Haloalkyl, -SO2R', -SO3H, -SO3M (M = Alkalimetall), -COOR', -CONHR',- CONR'R", -OCOOR', -OCOR', -OCONHR', (Meth)acrylamino, (Meth)acryloxy, C6-12 Aryl (optional substituiert durch C1-12 Alkyl, C1-12 Alkoxy, CN und/oder Halogen), C3-12 Heteroaryl (optional substituiert durch C1-12 Alkyl, C1-12 Alkoxy, CN und/oder Halogen) sind
und wobei
R' und R'' -H, C1-20 Alkyl, -C4-12 Cycloalkyl, C6-12 Aryl (optional substituiert durch C1-12 Alkyl, C1-12 Alkoxy, CN und/oder Halogen) oder C3-12 Heteroaryl (optional substituiert durch C1-12 Alkyl, C1-12 Alkoxy, CN und/oder Halogen) bedeuten,
X ein linearer oder verzweigter Linker ist, **dadurch gekennzeichnet, dass** zwischen dem O-Atom der Gruppe A und jeder T-Gruppe eine Kette aus mindestens 3, bevorzugt 4 Atomen ausgewählt aus Kohlenstoff, Sauerstoff, Stickstoff, Schwefel, Phosphor und/oder Silizium in der Kette besteht,
T für eine Urethan-Gruppe -O-(C=O)-NH- oder eine Urea-Gruppe -NH-(C=O)-NH-steht,
Q für $-(CH_2)_m-$ steht, wobei m = 1,2 oder 3 ist,
P für eine Mono-, Di- oder Trialkoxysilangruppe steht

n eine ganze Zahl zwischen 1 und 5 bedeutet, und
die Kratzfestschicht aus einem Kratzfestlack ist, dem Essigsäure zugesetzt wird.

**4.** Mehrschichtsystem gemäß einem der vorangehenden Ansprüche, wobei die Kratzfestschicht aus einem Hybridlack, insbesondere einem siloxanbasierten Sol-Gel-Lack, ist, dem Essigsäure zugesetzt wird.

**5.** Mehrschichtsystem gemäß einem der vorangehenden Ansprüche, wobei der thermoplastische Kunststoff der Basisschicht ausgewählt ist aus einem oder mehreren Kunststoffen aus der Gruppe enthaltend Polycarbonat, Polyestercarbonat, Polyester, Polyphenylenether, Pfropfcopolymer, Poly(meth)acrylat, Polystyrol sowie deren Copolymere und insbesondere ausgewählt ist aus einem oder mehreren Kunststoffen aus der Gruppe enthaltend Homopolycarbonat, Copolycarbonat und/oder thermoplastisches Polyestercarbonat und insbesondere bevorzugt Bisphenol-A-basiertes Polycarbonat ist.

**6.** Mehrschichtsystem gemäß einem der vorangehenden Ansprüche, wobei die Primerschicht hergestellt ist aus einer Primerformulierung enthaltend Bindermaterial aus Polyacrylat, insbesondere Polymethylmethacrylat, Lösemittel, einen silylierten UV-Absorber auf Triazinbasis und optional weiteren Stabilisatoren, UV-Stabilisatoren, anderen Additiven.

**7.** Mehrschichtsystem gemäß einem der vorangehenden Ansprüche, wobei die Primerschicht 0,01 Gew.-% bis 15,00 Gew.-%, bevorzugt 0,10 Gew.-% bis 10,00 Gew.-%, und besonders bevorzugt 3,00 Gew.-% bis 9,00 Gew.-% eines silylierten Triazin-UV-Absorbers der allgemeinen Formel (I).

**8.** Mehrschichtsystem gemäß einem der vorangehenden Ansprüche, zusätzlich enthaltend eine Interpenetrationsschicht (IPL), wobei Basischschicht (B), Primerschicht(en) (Pr) und Kratzfestschicht(en) (Kr) und Interpenetrationssschichten eine der Schichtabfolgen
(B) - (Pr) - (IPL) - (Kr)
(Kr) - (B) - (Pr) - (IPL) - (Kr)
(Kr) - (IPL) - (Pr) - (B) - (Pr) - (IPL) - (Kr)
einnehmen.

**9.** Mehrschichtsystem gemäß Anspruch 8, wobei das Schichtdickenverhältnis von Interpenetrationsschicht (IPL) zu Kratzfestschicht (Kr) > 10 % ist.

**10.** Mehrschichtsystem gemäß einem der vorangehenden Ansprüche zusätzlich enthaltend weitere funktionelle oder dekorative Schichten.

**11.** Verwendung eines Mehrschichtsystems gemäß einem der vorangehenden Ansprüche zur Herstellung von Scheinwerferabdeckscheiben, von Architektur - oder Automobilverscheibungen.

**12.** Verscheibungen enthaltend ein Mehrschichtsystem gemäß einem der Ansprüche 1 - 9, insbesondere für den Automobil- und Architekturbereich.

## Claims

**1.** Multi-coat system, comprising a basecoat comprising a thermoplastic polymer; a primer coat; and a scratch resistance coat comprising a scratch resistance varnish, where the primer layer comprises a silylated, triazine-based UV absorber and the scratch resistance coat is produced from a scratch resistance varnish comprising acid.

**2.** Multi-coat system according to Claim 1, where the scratch resistance coat is produced from a scratch resistance varnish containing 0.1% - 15.0%, preferably 0.5% - 10.0% and more preferably 1.0 - 8.0% of acetic acid.

**3.** Multi-coat system according to Claim 1 or 2, where the silylated, triazine-based UV absorber is a UV-absorbing compound from the group containing the compounds of the general formula (I)

$$A\text{-}X(\text{-}T\text{-}Q\text{-}P)_n \qquad (I),$$

where

A is

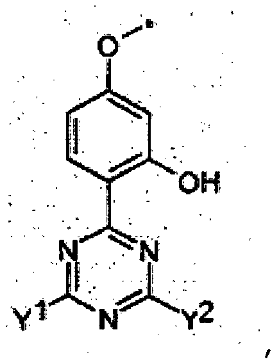

in which
$Y^1$ and $Y^2$ independently of one another are substituents having the general formulae

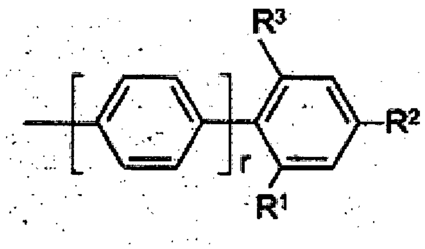

where
r is 0 or 1,
$R^1$, $R^2$ and $R^3$ independently of one another are H, OH, C1-20 alkyl, C4-12 cycloalkyl, C2-20 alkenyl, C1-20 alkoxy, C4-12 cycloalkoxy, C2-20 alkenyloxy, C7-20 aralkyl, halogen, -C≡N, C1-5 haloalkyl, -SO2R', -SO3H, -SO3M (M = alkali metal), -COOR', -CONHR', -CONR'R", -OCOOR', -OCOR', -OCONHR', (meth)acryloylamino, (meth)acryloyloxy, C6-12 aryl (optionally substituted by C1-12 alkyl, C1-12 alkoxy, CN and/or halogen), C3-12 heteroaryl (optionally substituted by C1-12 alkyl, C1-12 alkoxy, CN and/or halogen),
and where
R' and R" are -H, C1-20 alkyl, C4-12 cycloalkyl, C6-12 aryl (optionally substituted by C1-12 alkyl, C1-12 alkoxy, CN and/or halogen) or C3-12 heteroaryl (optionally substituted by C1-12 alkyl, C1-12 alkoxy, CN and/or halogen),
X is a linear or branched linker, **characterized in that**
between the O atom of the group A and each T group a chain consists of at least 3, preferably 4 atoms selected from carbon, oxygen, nitrogen, sulphur, phosphorus and/or silicon in the chain,
T is a urethane group -O-(C=O)-NH- or a urea group -NH-(C=O)-NH-,
Q is $-(CH_2)_m-$, where m is 1, 2 or 3,
P is a mono-, di- or trialkoxysilane group,
n is an integer between 1 and 5, and
the scratch resistance coat comprises a scratch resistance varnish to which acetic acid is added.

**4.** Multi-coat system according to any of the preceding claims, where the scratch resistance coat comprises a hybrid varnish, more particularly a siloxane-based sol-gel varnish, to which acetic acid is added.

**5.** Multi-coat system according to any of the preceding claims, where the thermoplastic polymer of the basecoat is selected from one or more polymers from the group containing polycarbonate, polyestercarbonate, polyester, polyphenylene ether, graft copolymer, poly(meth)acrylate, polystyrene and also copolymers thereof, and more particularly is selected from one or more polymers from the group containing homopolycarbonate, copolycarbonate and/or thermoplastic polyestercarbonate, and with more particular preference is bisphenol A-based polycarbonate.

**6.** Multi-coat system according to any of the preceding claims, where the primer coat is produced from a primer formulation comprising binder material of polyacrylate, more particularly polymethyl methacrylate, solvents, a silylated, triazine-based UV absorber and optionally further stabilizers, UV stabilizers and other additives.

**7.** Multi-coat system according to any of the preceding claims, where the primer coat comprises 0.01 wt% to 15.00 wt%, preferably 0.10 wt% to 10.00 wt%, and more preferably 3.00 wt% to 9.00 wt% of a silylated triazine UV absorber of the general formula (I).

**8.** Multi-coat system according to any of the preceding claims, further comprising an interpenetration coat (IPL), with basecoat (B), primer coat(s) (Pr) and scratch resistance coat(s) (Kr) and interpenetration coats adopting one of the following coat sequences:

(B)-(Pr)-(IPL)-(Kr)
(Kr)-(B)-(Pr)-(IPL)-(Kr)
(Kr)-(IPL)-(Pr)-(B)-(Pr)-(IPL)-(Kr).

**9.** Multi-coat system according to Claim 8, where the coat thickness ratio of interpenetration coat (IPL) to scratch resistance coat (Kr) is > 10%.

**10.** Multi-coat system according to any of the preceding claims, further comprising other functional or decorative layers.

**11.** Use of a multi-coat system according to any of the preceding claims for producing headlamp covers, architectural glazing systems or automotive glazing systems.

**12.** Glazing systems comprising a multi-coat system according to any of Claims 1 - 9, more particularly for the automotive and architectural sectors.

## Revendications

**1.** Système multicouche, contenant une couche de base constituée par un matériau synthétique thermoplastique, une couche d'apprêt et une couche de résistance aux rayures en une laque résistante aux rayures, la couche d'apprêt contenant un absorbant des UV, silylé à base de triazine et la couche de résistance aux rayures étant préparée à partir d'une laque résistante aux rayures contenant un acide.

**2.** Système multicouche selon la revendication 1, la couche résistante aux rayures étant préparée à partir d'une laque résistante aux rayures contenant 0,1%-15,0%, de préférence 0,5%-10,0% et de manière particulièrement préférée 1,0-8,0% d'acide acétique.

**3.** Système multicouche selon la revendication 1 ou 2, l'absorbant des UV, silylé, à base de triazine étant un composé absorbant les UV du groupe contenant les composés de formule générale (I)

$$A\text{-}X(\text{-}T\text{-}Q\text{-}P)_n \qquad (I),$$

où
A représente

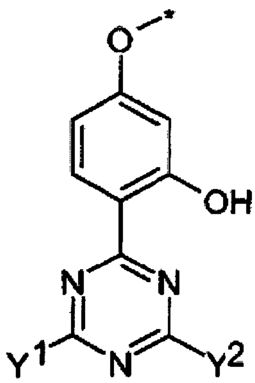

dans laquelle
$Y^1$ et $Y^2$ représentent, indépendamment l'un de l'autre, des substituants de formule générale

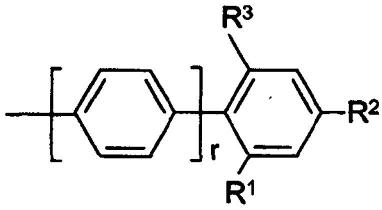

où
r vaut 0 ou 1,
$R^1$, $R^2$, $R^3$ indépendamment les uns des autres, représentent H, OH, $C_{1-20}$-alkyle, $C_{4-12}$-cycloalkyle, $C_{2-20}$-alcényle, $C_{1-20}$-alcoxy, $C_{4-12}$-cycloalcoxy, $C_{2-20}$-alcényloxy, $C_{7-20}$-aralkyle, halogène, -C≡N, $C_{1-5}$-halogénoalkyle, $-SO_2R'$, $-SO_3H$, $-SO_3M$ (M = métal alcalin), -COOR', -CONHR', -CONR'R", -OCOOR', -OCOR', -OCONHR', (méth)acrylamino, (méth)acryloxy, $C_{6-12}$-aryle (éventuellement substitué par $C_{1-12}$-alkyle, $C_{1-12}$-alcoxy, CN et/ou halogène), $C_{3-12}$-hétéroaryle (éventuellement substitué par $C_{1-12}$-alkyle, $C_{1-12}$-alcoxy, CN et/ou halogène) et où
R' et R" signifient -H, $C_{1-20}$-alkyle, $-C_{4-12}$-cycloalkyle, $C_{6-12}$-aryle (éventuellement substitué par $C_{1-12}$-alkyle, $C_{1-12}$-alcoxy, CN et/ou halogène) ou $C_{3-12}$-hétéroaryle (éventuellement substitué par $C_{1-12}$-alkyle, $C_{1-12}$-alcoxy, CN et/ou halogène),
X représente un lieur linéaire ou ramifié, **caractérisé**
**en ce qu'**il existe, entre l'atome O du groupe A et chaque groupe T, une chaîne constituée par au moins 3, de préférence 4 atomes choisis parmi le carbone, l'oxygène, l'azote, le soufre, le phosphore et/ou le silicium dans la chaîne,
T représente un groupe uréthane -O-(C=O)-NH- ou un groupe urée -NH-(C=O)-NH-,
Q représente $-(CH_2)_m-$, m = 1,2 ou 3,
P représente un groupe monoalcoxysilane, dialcoxysilane ou trialcoxysilane
n signifie un nombre entier entre 1 et 5 et
la couche résistante aux rayures étant constituée par une laque résistante aux rayures à laquelle est ajouté de l'acide acétique.

**4.** Système multicouche selon l'une quelconque des revendications précédentes, la couche résistante aux rayures étant constituée par une laque hybride, en particulier une laque sol-gel à base de siloxane, à laquelle est ajouté de l'acide acétique.

**5.** Système multicouche selon l'une quelconque des revendications précédentes, le matériau synthétique thermoplastique de la couche de base étant choisi parmi un ou plusieurs matériaux synthétiques du groupe contenant un polycarbonate, un polyestercarbonate, un polyester, un polyphénylène-éther, un copolymère greffé, un poly(méth) acrylate, un polystyrène ainsi que leurs copolymères et en particulier choisi parmi un ou plusieurs matériaux synthétiques du groupe contenant un homopolycarbonate, un copolycarbonate et/ou un polyestercarbonate thermoplastique et étant de manière particulièrement préférée un polycarbonate à base de bisphénol-A.

**6.** Système multicouche selon l'une quelconque des revendications précédentes, la couche d'apprêt étant préparée à partir d'une formulation d'apprêt contenant un matériau liant en polyacrylate, en particulier un poly(méthacrylate de méthyle), un solvant, un absorbant des UV, silylé à base de triazine et éventuellement d'autres stabilisants, des stabilisants des UV, d'autres additifs.

**7.** Système multicouche selon l'une quelconque des revendications précédentes, la couche d'apprêt contenant 0,01% en poids à 15,00% en poids, de préférence 0,10% en poids à 10,00% en poids, et de manière particulièrement préférée 3,00% en poids à 9,00% en poids d'un absorbant des UV, silylé à base de triazine de formule générale (I).

**8.** Système multicouche selon l'une quelconque des revendications précédentes, contenant en outre une couche d'interpénétration (IPL), la couche de base (B), la/les couche(s) d'apprêt (Pr) et la/les couche(s) résistante(s) aux rayures (Kr) et les couches d'interpénétration se succédant dans l'un des ordres suivants
(B)-(Pr)-(IPL)-(Kr)
(Kr)-(B)-(Pr)-(IPL)-(Kr)

(Kr)-(IPL)-(Pr)-(B)-(Pr)-(IPL)-(Kr).

**9.** Système multicouche selon la revendication 8, le rapport des épaisseurs de la couche d'interpénétration (IPL) à celle de la couche de résistance aux rayures (Kr) étant > 10%.

**10.** Système multicouche selon l'une quelconque des revendications précédentes, contenant en outre d'autres couches fonctionnelles ou décoratives.

**11.** Utilisation d'un système multicouche selon l'une quelconque des revendications précédentes pour la production de vitres de protection de projecteurs, de vitres architectoniques ou pour automobiles.

**12.** Vitres contenant un système multicouche selon l'une quelconque des revendications 1-9, en particulier pour le domaine de l'automobile et de l'architecture.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2006108520 A
- WO 2000066675 A1
- US 6225384 A
- EP 0339257 A
- US 5041313 A
- EP 0570165 A
- EP 0931820 A
- DE 10200901943
- US 5391795 A
- EP 672732 A
- WO 2009049904 A1
- US 4410594 A
- US 4373061 A
- WO 2008109072 A
- US 2007104956 A


### In der Beschreibung aufgeführte Nicht-Patentliteratur


- **RALPH K. ILER.** The Chemistry of Silica. John Wiley & Sons, 1979, 312-461
- Organic Coatings: Science and Technology. John Wiley & Sons, 1994, 65-82